# EUROPÄISCHE PATENTSCHRIFT

(11) **EP 0 862 007 B1**
(45) Veröffentlichungstag und Bekanntmachung des Hinweises auf die Patenterteilung: **14.05.2003**
(21) Anmeldenummer: 97122601.4
(22) Anmeldetag: 20.12.1997
(51) Int. Cl.: F16L 3/24

(54) **Vorrichtung zum Befestigen eines Rohres oder dgl. an einer Befestigungsschiene**
Device for fastening a pipe or the like to a fixing rail
Dispositif pour la fixation d'un tuyau ou similaire à un rail de fixation

(30) Priorität: 27.02.1997 DE 29703537 U
(43) Veröffentlichungstag der Anmeldung: 02.09.1998
(73) Patentinhaber: fischerwerke Artur Fischer GmbH & Co. KG, 72178 Waldachtal (DE)
(72) Erfinder: Lind, Stefan, 72178 Waldachtal (DE)

(56) Entgegenhaltungen:
- DE-A- 2 619 702
- DE-B- 1 054 293
- PATENT ABSTRACTS OF JAPAN vol. 1996, no. 05, 31. Mai 1996 (1996-05-31) & JP 08 004949 A (TOSHIBA ENG & CONSTR CO LTD;OTHERS: 01), 12. Januar 1996 (1996-01-12)

## Beschreibung

Die Erfindung betrifft eine Vorrichtung zum Befestigen eines Rohres oder dgl. an einer Befestigungsschiene mit den Merkmalen des Oberbegriffs des Anspruchs 1.

Eine derartige Vorrichtung ist aus DE 26 19 702 A bekannt. Die bekannte Vorrichtung weist einen Grundkörper als Blechstanz- und -biegeteil mit zwei gegenüberliegenden, seitlichen Schlitzen auf. Mit diesen Schlitzen ist der Grundkörper formschlüssig mit der Befestigungsschiene in Eingriff bringbar. Die Befestigungsschiene ist ein Vierkant-Hohlprofil mit einem Längsschlitz. Gleichzeitig bildet der Grundkörper einstückig ein Federelement, das den Grundkörper von der Befestigungsschiene abdrückt, so dass er unter Vorspannung mit der Befestigungsschiene in Eingriff steht. Das Problem der bekannten Vorrichtung dieser Gattung besteht in der mangelnden Flexibilität zur Aufnahme von Rohren oder dgl. So schlägt DE 26 19 702 A vor, die Vorrichtung derart auszuführen, dass das Rohr oder dgl. von der Vorrichtung selbst geklemmt wird, d. h. Grundkörper und Befestigungseinrichtung sind einstückig. Das Rohr oder dgl. wird damit im festen Abstand zur Befestigungsschiene angebracht.

Der Erfindung liegt die Aufgabe zugrunde, eine Vorrichtung der eingangs genannten Art so auszubilden, daß sie einfach und preiswert herstellbar ist und die eine flexible Befestigung von Rohren oder dgl. in unterschiedlichen Abständen und Winkeln erlaubt.

Diese Aufgabe wird erfindungsgemäß durch die Merkmale des Anspruchs 1 gelöst. Der erfindungsgemäße Grundkörper ist einstückig mit dem Federelement, das ihn unter Vorspannung an der Befestigungsschiene hält. Auf diese Weise läßt sich der Grundkörper in ein oder zwei Arbeitsgängen herstellen. Das aufwendige Anbringen eines separaten Federelements am Grundkörper entfällt.

Der Grundkörper ist ein Blechstanz- und -biegeteil, das zu einer Öse gebogen ist. An einer Stelle der Öse stehen vorzugsweise beide Enden des den Grundkörper bildenden Blechstanz- und -biegeteils als Federzungen von der Öse ab. Mit ihnen stützt sich der in die Befestigungsschiene. eingesetzter Grundkörper im Innern der Befestigungsschiene ab, so daß er unter Vorspannung mit der Befestigungsschiene in Eingriff steht. Dadurch wird vermieden, daß sich der Grundkörper unbeabsichtigt in Längsrichtung der Befestigungsschiene verschiebt. Insbesondere bei einer vertikalen Wandmontage der Befestigungsschiene ist der Grundkörper an seiner jeweiligen Position in der Befestigungsschiene gehalten und steht gegen die Schwerkraft in etwa rechtwinklig, d. h. horizontal von der Befestigungsschiene ab. Zum Eingriff mit der Befestigungsschiene weist der Grundkörper zwei einander gegenüberliegende Schlitze an seinen Seitenrändern im Bereich eines Übergangs von der Öse zu den Federzungen auf, in die durch den Längsschlitz voneinander getrennte Seitenwandabschnitte der Befestigungsschiene eingreifen.

Als Befestigungseinrichtung ist bei einer Ausgestaltung der erfindungsgemäßen Vorrichtung eine Schraube oder ein Gewindebolzen vorgesehen, der durch ein Loch in der Öse hindurchgesteckt und in eine in der Öse einliegende Mutter eingeschraubt ist. Um ein allseitiges Schwenken der Schraube oder des Gewindebolzens zu ermöglichen, ist das den Grundkörper bildende Blechstanz- und -biegeteil im Bereich der Befestigungseinrichtung kuppelartig, also in zwei Richtungen gewölbt und das Loch im Grundkörper weist ein Übermaß in Bezug auf die Schraube oder den Gewindebolzen auf. Günstig für die allseitige Schwenkbarkeit ist, wenn eine am Grundkörper anliegende Stirnseite der Mutter der Wölbung des Grundkörpers angepaßt ballig ausgebildet ist.

Die den Grundkörper bildende Öse ist bei einer Ausgestaltung der Erfindung so eng ausgebildet, daß die Mutter der Befestigungseinrichtung durch Formschluß nach Art eines Gabelschlüssels gegen Verdrehen gesichert im Grundkörper gehalten ist. Um die Mutter gewollt verdrehen zu können, weist der Grundkörper in einem Seitenbereich der Befestigungseinrichtung eine Aussparung auf, die das Verdrehen der Mutter ermöglicht, wenn diese von ihrer Anlage im Innern des Grundkörpers abgehoben ist, sich also im Bereich der Aussparung befindet.

Zur Verdrehsicherung der in die Befestigungsschiene eingesetzten Vorrichtung weist diese bei einer bevorzugten Ausgestaltung der Erfindung eine Lasche auf, die in den Längsschlitz der Befestigungsschiene hineinbiegbar ist, so daß sich der Grundkörper in der Befestigungsschiene nicht verdrehen läßt und daher nicht außer Eingriff bringbar ist.

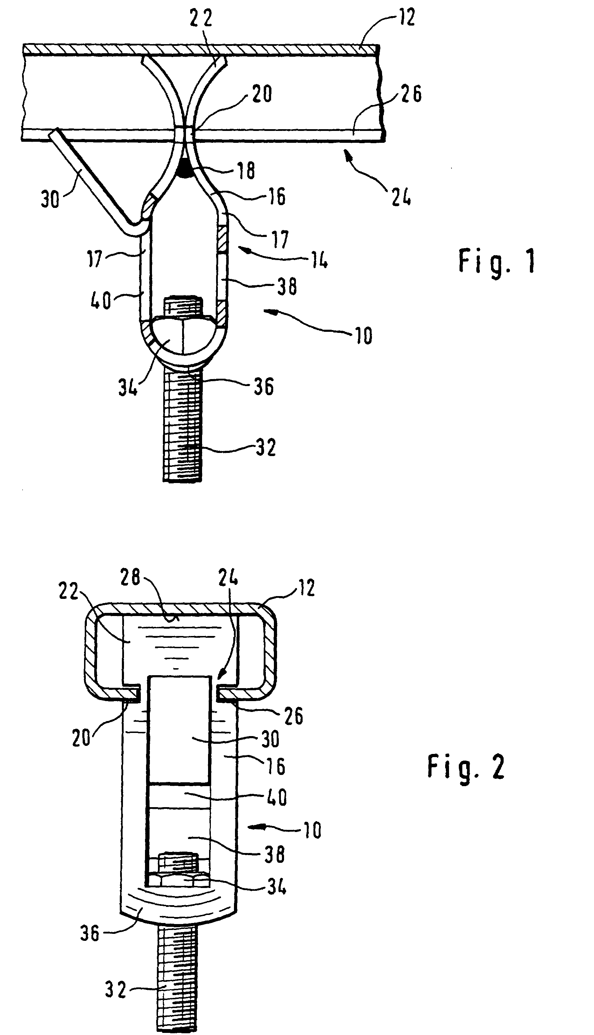

Die Erfindung wird nachfolgend anhand eines in der Zeichnung dargestellten Ausführungsbeispiels näher erläutert. Die beiden Figuren zeigen eine erfindungsgemäße Vorrichtung in Seitenansicht aus zwei um 90° zueinander versetzten Blickrichtungen.

Die in der Zeichnung dargestellte, erfindungsgemäße Vorrichtung 10 ist in eine Befestigungsschiene 12 eingesetzt. Die Vorrichtung 10 weist einen zu einer Öse 14 gebogenen, als Blechstanz- und -biegeteil hergestellten Grundkörper 16 auf. Die Öse 14 hat näherungsweise die Form eines langgestreckten Tropfens mit abschnittsweise zueinander parallelen Seitenwandabschnitten 17. Durch eine Schweißung 18 wird die Öse 14 geschlossen gehalten. Zum formschlüssigen Eingriff an der Befestigungsschiene 12 ist der Grundkörper 16 mit zwei einander gegenüberliegend angebrachten Schlitzen 20 versehen, die gegenüber der Schweißung 18 ein kurzes Stück in Richtung der Befestigungsschiene 12 versetzt am Grundkörper 16 angebracht sind. Zwei geschwungen auseinandergebogene Enden des den Grundkörper 16 bildenden Blechstanz- und -biegeteils stehen als Federzungen 22 von der Schweißung 18 über die Schlitze 20 hinaus von der Öse 14 ab.

Die Befestigungsschiene 12 weist ein Rechteck-Hohlprofil auf, das mit einem Längsschlitz 24 zum Einsetzen der Vorrichtung 10 versehen ist. Der Längsschlitz 24 trennt zwei aufeinander zustehende Wandabschnitte 26 der Befestigungsschiene 12 voneinander. Zum Einsetzen in die Befestigungsschiene 12 wird die Vorrichtung 10 in um 90° gegenüber der in der Zeichnung dargestellten Stellung mit ihren Federzungen 22 durch den Längsschlitz 24 hindurch in die Befestigungsschiene 12 eingeführt. Die Federzungen 22 stoßen gegen eine Innenseite 28 der Befestigungsschiene 12. Die Vorrichtung 10 wird gegen die Federkraft der Federzungen 22 so tief in die Befestigungsschiene 12 hineingedrückt, daß sich ihre Schlitze 20 in einer Ebene mit den den Längsschlitz 24 begrenzenden Wandabschnitten 26 der Befestigungsschiene 12 befinden. Anschließend wird die Befestigungsvorrichtung 10 um 90° in die in der Zeichnung dargestellte Stellung verdreht, so daß die Wandabschnitte 26 der Befestitungsschiene 12 in Eingriff in die Schlitze 20 der Vorrichtung 10 gelangen und die Vorrichtung 10 formschlüssig in der Befestigungsschiene 12 gehalten ist. Die Federkraft der Federzungen 22 drückt die Vorrichtung 10 mit ihren Schlitzen 20 gegen die Wandabschnitte 26 beiderseits des Längsschlitzes 24 der Befestigungsschiene 12, so daß die Vorrichtung 10 mit der Federkraft der Federzungen 22 in der Befestigungsschiene 12 festgeklemmt ist.

Um ein versehentliches Lösen der Vorrichtung 10 aus der Befestigungsschiene 12 zu verhindern, weist ihr Grundkörper 16 eine Lasche 30 auf, die aus einer Seitenwand 17 der Öse 14 ausgestanzt ist. Diese Lasche 30 wird nach dem Einsetzen der Vorrichtung 10 in die Befestigungsschiene 12 in die in der Zeichnung dargestellte, in den Längsschlitz 24 der Befestigungsschiene 12 eingreifende Stellung gebogen, so daß ein Verdrehen der Vorrichtung 10 und mithin ein außer Eingriff bringen von der Befestigungsschiene 12 verhindert wird.

An einer der Befestigungsschiene 12 abgewandten Stelle der Öse 14 ist ein in der Zeichnung nicht sichtbares Loch im Grundkörper 16 angebracht. Durch dieses Loch ist ein Gewindebolzen 32 gesteckt, der in eine in der Öse 14 einliegende Mutter 34 eingeschraubt ist. Der Gewindebolzen 32 ist zum Anbringen beispielsweise eines Rohres mit Hilfe einer Rohrschelle (nicht dargestellt) vorgesehen. Um den Gewindebolzen 32 um einen begrenzten Winkel in alle Richtungen verschwenken zu können, weist das Loch ein Übermaß in Bezug auf den Gewindebolzen 32 auf. Die Mutter 34 weist eine ballige, in der Zeichnung nicht sichtbare Stirnfläche auf, mit der sie an der Innenseite der Öse 14 anliegt. Die Öse 14 ist in dem Bereich, in dem die Mutter 34 an ihr anliegt, deren balliger Stirnfläche angepaßt kuppelartig gewölbt. Im dargestellten Ausführungsbeispiel hat die Wölbung 36 näherungsweise die Form einer Kalotte. Zur Verdrehsicherung der Mutter 34 ist die Öse 14 so eng ausgebildet, daß sie in etwa eine Schlüsselweite der Mutter 34 aufweist und diese nach Art eines Gabelschlüssels verdrehsicher hält. Um die Mutter 34 dennoch in der Öse 14 verdrehen zu können, weist die Öse 14 Aussparungen 38, 40 seitlich und mit etwas Abstand von der Wölbung 36 auf. Wird die Mutter 34 in axialer Richtung des Gewindebolzens 32 von der Wölbung 36 bis in den Bereich der Aussparungen 38, 40 abgehoben, läßt sie sich frei drehen. Aus einer der beiden Aussparungen 40 ist die Lasche 30 gestanzt.

## Patentansprüche

1. Vorrichtung zum Befestigen eines Rohres oder dgl. an einer Befestigungsschiene (12), mit einem Grundkörper (16) als Blechstanz- und -biegeteil, der zwei gegenüberliegende, seitliche Schlitze (20) aufweist, mit der der Grundkörper (16) formschlüssig mit der Befestigungsschiene (12) in Eingriff bringbar ist, und mit einer Befestigungseinrichtung (32, 34) zum Befestigen eines Rohres oder dgl. an der Vorrichtung, wobei der Grundkörper (16) ein mit ihm einstückiges Federelement (22) aufweist, das den Grundkörper (16) von der Befestigungsschiene (12) abdrückt, so daß er unter Vorspannung mit der Befestigungsschiene (12) in Eingriff bringbar ist, **dadurch gekennzeichnet, daß** der Grundkörper (16) zu einer Öse (14) gebogenen ist, die im Bereich der Befestigungseinrichtung (32, 34) eine ein Schwenklager für die Befestigungseinrichtung (32, 34) bildende, kuppelartige Wölbung (36) aufweist.

2. Vorrichtung nach Anspruch 1, **dadurch gekennzeichnet, daß** der Grundkörper in einem Seitenbereich der Befestigungseinrichtung (32, 34) eine Aussparung (38, 40) aufweist.

3. Vorrichtung nach Anspruch 1, **dadurch gekennzeichnet, daß** der Grundkörper (16) eine Lasche (30) aufweist, die in die Befestigungsschiene (12) hineinbiegbar ist.

## Claims

1. Device for fastening a pipe or the like to a fixing rail (12), having a base body (16) in the form of a punched and bent sheet-metal component that comprises two opposite lateral slits (20) with which the base body (16) is arranged to be brought into positive engagement with the fixing rail (12), and having a fixing means (32, 34) for fixing a pipe or the like to the device, the base member (16) comprising in one piece therewith a spring element (22) that presses the base body (16) away from the fixing rail (12), so that the base body is capable of being brought under bias into engagement with the fixing rail (12), **characterised in that** the base body (16) is bent to form an eye (14) which, in the region of the fixing means (32, 34) comprises a dome-like curvature (36) forming a pivot bearing for the fixing means (32, 34).

2. Device according to claim 1, **characterised in that** the base body comprises a cut-out (38, 40) in a region laterally of the fixing means (32, 34).

3. Device according to claim 1, **characterised in that** the base body (16) comprises a stay (30), which is bendable into the fixing rail (12).

## Revendications

1. Dispositif pour la fixation d'un tuyau ou similaire à un rail de fixation (12), avec un corps de base (16) comme pièce de tôle estampée et pliée, qui présente deux fentes (20) latérales l'une en face de l'autre, avec lesquelles le corps de base (16) peut être mis en prise par concordance des formes avec le rail de fixation (12), et avec un organe de fixation (32, 34) pour fixer un tuyau ou similaire au dispositif, le corps de base (16) présentant un élément de ressort (22) ne formant qu'une seule pièce avec lui, élément de ressort qui presse le corps de base (16) en espacement du rail de fixation (12) de telle sorte qu'il peut être mis en prise avec le rail de fixation (12) sous pré-contrainte, **caractérisé en ce que** le corps de base (16) est plié pour former une boucle 14, qui, dans la zone de l'organe de fixation (32, 34) présente une courbure (36) en forme de coupole formant un palier de pivotement pour l'organe de fixation (32, 34).

2. Dispositif selon la revendication 1, **caractérisé en ce que** le corps de base présente dans une zone latérale de l'organe de fixation (32, 34) un dégagement (38, 40).

3. Dispositif selon la revendication 1, **caractérisé en ce que** le corps de base (16) présente une éclisse (30) pouvant être introduite par pliage dans le rail de fixation (12).
